Europäisches Patentamt

European Patent Office

Office européen des brevets

(11) Publication number: **0 393 300**
**A1**

# EUROPEAN PATENT APPLICATION

(21) Application number: 89870056.2

(51) Int. Cl.5: **G01V 3/12**

(22) Date of filing: **21.04.89**

(43) Date of publication of application:
**24.10.90 Bulletin 90/43**

(84) Designated Contracting States:
**AT BE CH DE ES FR GB GR IT LI LU NL SE**

(71) Applicant: **"BLIS"**
**Vuldershoek 18**
**B-3170 Herselt(BE)**

(72) Inventor: **Vanuytven, Eddy**
**Katerberg 4**
**B-2440 Geel(BE)**
Inventor: **Vanuytven, Marcel**
**Katersberg 4**
**B-2440 Geel(BE)**

(74) Representative: **Callewaert, Jean et al**
**Bureau Gevers S.A. rue de Livourne 7 bte 1**
**B-1050 Bruxelles(BE)** .

(54) **A device for processing an electromagnetic wave.**

(57) Device for processing a first electromagnetic wave obtained upon reflection of a second electromagnetic wave transmitted into a soil, said device comprises a display unit having a cathode ray tube display and provided for displaying said first wave in synchronism with the transmission of said second wave. Said device further comprises a video-camera (7) for recording a wave displayed on said display, and means for rotating said displayed wave about substantially 90°.

Fig.1.

EP 0 393 300 A1

The present invention relates to a device for processing a first electromagnetic wave obtained upon reflection of a second electromagnetic wave transmitted into a soil, said device comprises a display unit having a cathode ray tube display and provided for displaying said first wave in synchronism with the transmission of said second wave.

Such a device is described in the European patent application n° 0288578. In the known device a second electromagnetic wave generated by a pulse generator, for example a radar, is radiated into a soil. The radiated electromagnetic wave is reflected by objects situated into the soil. Such objects are for example formed by pipes, electrical conducts, etc. The reflected wave forms a first electromagnetic signal which is received by a receiving antenna. The received wave is sampled by means of a sampling device. The samples are thereafter inputted into a computing unit for processing purposes. The processed signal samples are thereafter displayed on a display unit. The known device thus enables to scan the soil and to check for the presence of objects in that soil.

A drawback of the known device is that only a very limited number of samples of the whole reflected wave are used for processing purposes. This signifies that a large part of the reflected wave is simply lost, causing an unefficient use of the available data.

It is an object of the present invention to provide a device for processing an electromagnetic wave wherein the available data is used in a more efficient manner.

A device according to the invention is therefore characterized in that it further comprises a video-camera for recording a wave displayed on said display, and means for rotating said displayed wave about substantially 90°. By recording the displayed wave by means of a video-camera, use is made of the lagging effect of the cathode ray tube which forms a temporary buffer for the received wave. The wave as a whole is recorded by the video-camera which allows to apply further processing on the whole wave signal. By further rotating the displayed wave there is obtained that to each scanning line a well defined depth is assigned and that successive scanning lines represents successive depths. Processing on a same videoline thus corresponds to processing on signals originating from a same depth in the soil.

A first preferred embodiment of a device according to the invention is characterized in that it also comprises filter means for filtering said rotated displayed wave. This enables a filtering of the noise present in the received wave.

Preferably said filter unit comprises an integration element having an input for receiving the intensity value of a video line and being provided for integrating said intensity value, and output of said integration element being connected to an input of an averaging element provided for determing an average value of the integrated intensity value. This enables to determine easily the mean intensity value of the displayed wave.

Preferably said filter unit comprises a first integrated element having an output for receiving the intensity value of one video line and being provided for integrating said intensity value, an output of said integration element being connected to a sample and hold element, having a control input for receiving a horizontal sync pulse, an output of said sample and hold element being connected to an input of an inverting element of which an output is connected to an input of a second integration element, an output of said second integration element being connected to a first input of a comparator, a second input of said comparator being provided for receiving a reference voltage.

A second preferred embodiment of a device according to the invention is characterized in that said rotating means are formed by a positioning of the camera rotated over substantially 90° with respect to a normal usual position of the camera.

The invention will now be described in more details with respect to the drawings. It will be clear that the invention is not limited to the examples illustrated in the drawings and that within the scope of the invention several modifications are possible.In the drawings:

Figure 1 illustrates a set-up wherein use is made of a device according to the invention.

Figure 2 illustrates an example of a first displayed waveform as recorded by a camera which is part of a device according to the invention.

Figure 3 illustrates a first embodiment of a filter unit which is part of a device according to the invention.

Figure 4 illustrates a wave form as processed by the filter unit of figure 3.

Figure 5 illustrates a second embodiment of a filter unit which is part of a device according to the invention.

Figure 6 illustrates an example of a second displayed wave form.

Figure 7 illustrates a wave form as processed by the filter unit of figure 5.

In the figures same reference numbers are assigned to same or analogous elements.

In order to detect the presence of an object in the soil, use is made of a wave generator 1, for example a radar, which transmits by means of an antenna 2 an electromagnetic wave into the soil. The electromagnetic wave has for example a frequency ranging between 100 MHz to 1 GHz, an amplitude ranging between 20 and 1000 Volt and a pulse repetition rate ranging between 1 Hz and 1 MHz. Better signal measurements are obtained at higher pulse repetition rates. When an object, as for example a pipe or a conduct, is present in the scanned soil part, that object will reflect the transmitted wave which is then picked up by a receiving antenna 3. The transmission antenna 2 and the receiving antenna 3 are represented as two individual antenna's but it will be clear that the transmission and receiving antenna's can be formed by one and the same antenna.

The reflected electromagnetic wave picked up by the antenna 3 is inputted into an amplifier 4, the ouput of which is connected to an input of an oscilloscope 5, preferably an oscilloscope able to process signals having a frequency up to 500 MHz. A trigger input of the oscilloscope 5 is connected to an output of a timing and control unit 6 which is further connected to the wave generator 1. The timing and control unit 6 synchronizes the wave signal displayed on the oscilloscope with the transmitted wave, for example by supplying the same trigger pulse to both, the wave generator 1 and the oscilloscope 5. By synchronizing the transmitted wave and the displayed wave it is possible to determine the depth at which the object having caused the reflection of the transmitted wave, is situated in the soil.

The whole reflected wave signal, such as picked up by the receiving antenna 3 is displayed on the screen of the oscilloscope 5. The displayed signal comprises i.a. fast time dependent pulses originating from small objects in the soil such as for example electric cables even as large amplitude waves originating from bigger objects and also a lot of noise. Signal processing has thus to be applied on the received signal in order to select the relevant information from the received signal. For processing and analyse purposes the wave signal as displayed on the cathode ray tube (CRT) of the osccilloscope is recorded by means of a videocamera 7, preferably a CCD camera. The camera 7 is not disposed according to its normal usual position but according to a position which is rotated over an angle of substantially 90° (counter clockwise) with respect to the normal usual position. Instead of disposing the camera rotated over 90° it would also be possible to dispose the camera according to its normal usual position and to apply a rotation over 90° on the recorded image. Instead of rotating the camera counter clockwise, it is of course also possible to rotate it clockwise. However, the rotation direction is relevant for processing purpose. By rotating the camera counter clockwise one obtains that the topline of the picture scanned by the video camera corresponds with the soil level.

By recording by means of a camera the wave displayed by the CRT of the oscilloscope, use is made of the lagging effect of the CRT, which enables a temporarily storage of the displayed data. Due to the lagging effect of the CRT and eventually of the camera, the displayed wave form does not disappear immediately from the display screen but remains for a limited time while slowly extinguishing. This effect allows to delay signals which normally only appear for a few nanoseconds on the screen. Due to the lagging effect those signals are now displayed during a few milliseconds which enables a recording of that signal by means of the camera. The CRT thus buffers temporarily the displayed data enabling a recording of the whole displayed wave form by means of the video camera. Processing can thus be applied on the whole reflected wave signal. That displayed wave signal is built from a plurality, for example at least hundred, reflected waves picked up by the antenna 3. A first averaging is thus already done by the successive display of that plurality of reflected waves.

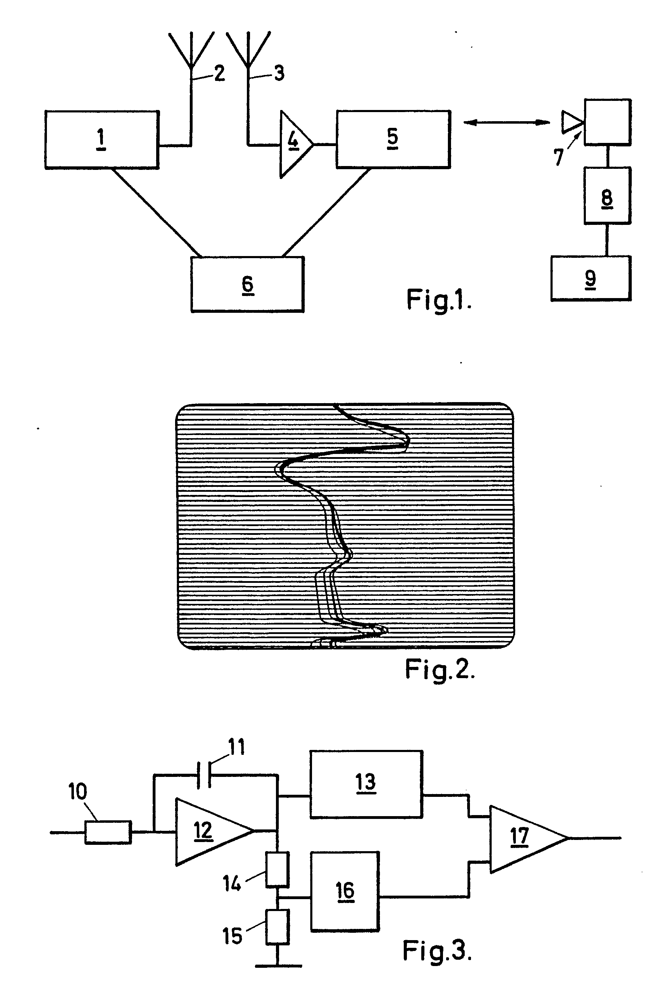

Due to the fact that the displayed signal is triggered with the transmitted signal, and that a reflected signal is displayed, there is a time relation between the time at which the different signal points appear on the display screen and the position of the object in the soil which has caused the reflection of the transmitted wave. Each point on the horizontal axis (= time basis) of the scope thus corresponds with a particular depth in the soil. By rotation over 90° of the camera or the displayed picture there is now obtained that each scanned video line corresponds with a particular depth in the soil. All signals having a same delay with respect to the trigger signal are now within the same video line and can now easily be filtered out of the noise by using integration technics. Figure 2 shows an example of a wave signal recorded by a camera 7. The vertical axis represents the depth and the horizontal axis the intensity of the signal. In that figure, the signals on top of the figure originate from a reflection on an object which is situated at a shallow position. Those signals normally do not contain much noise. The deeper the reflected waves come from (bottom of the figure) the noisiest they are.

The processing on the recorded image is realized by the processing unit 8 which comprises at least a filter unit. The processing unit 8 is connected with the camera 7. An output of the processing unit is connected with a video recorder 9 enabling to record the processed signal. It is of course also possible to store the recorded image directly on a video tape and to do the processing thereafter. However a more efficient use of the storage capacity of the video tape is made by first filtering the signal. In another embodiment the processing unit 8 only applies a filtering process on the received signal and the filtered signal is then supplied to a further processing unit, for example a personal computer, allowing further processing of the signal.

Figure 3 illustrates a first embodiment of a filter unit. The video line scanned by the camera is inputted into a resistor 10 which is part of an integration unit, further comprising a condenser 11 and a differential amplifier 12. The condenser is mounted in the feedback loop of the differential amplifier 12. An output of the differential amplifier is inputted on the one hand into a delay line 13, provided for delaying the inputted signal over a period of 64 $\mu$5, i.e. the line period between two horizontal sync pulses of a television signal, and on the other hand into a voltage divider which comprises two resistors 14 and 15 having a comparable resistance value. A sample and hold element 16 has an input connected with a connection line between the resistors 14 and 15. An output of the delay line 13 respectively of the sample and hold element 16 is connected with a first respectively a second input of a comparator 17. An output of the comparator is connected to a video input of the video recorder 9, or to a further processing device.

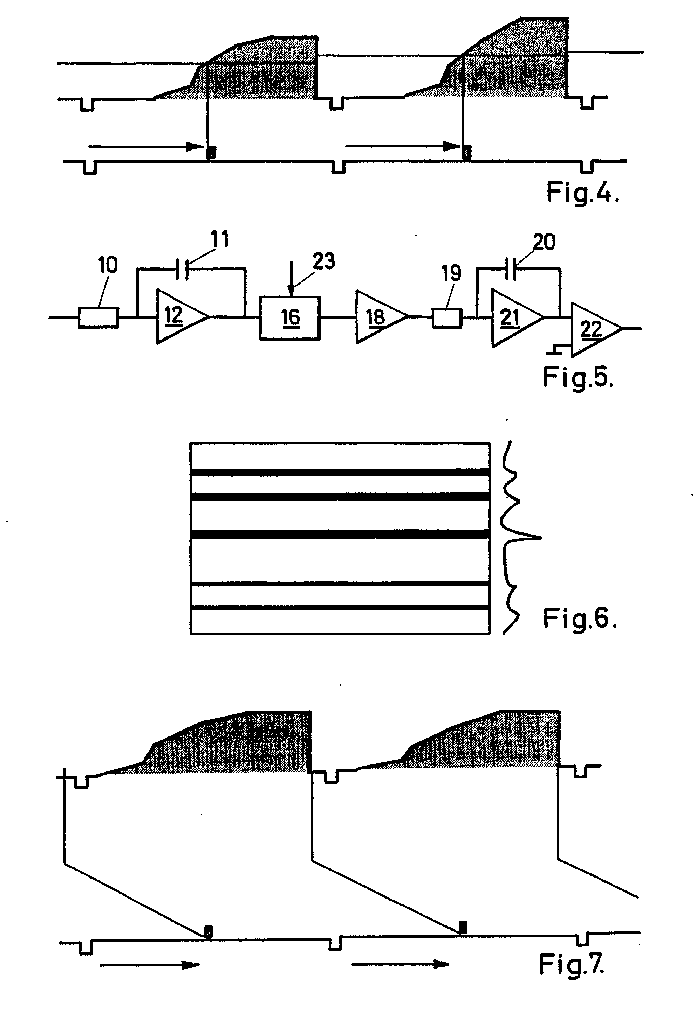

A television signal, i.e. the intensity signal of one television line, is integrated by the integration unit 10, 11, 12 in order to filter out the noise. The integrated signal is supplied to the delay line 13 and to the voltage divider and sample and hold element. The voltage divider 14, 15 divides the integrated signal in two in order to obtain an average value of the inputted signal. The average value is fed into the sample and hold unit 16. As soon as the signal outputted by the delay line 13 has reached a value equal to the average value indicated by the sample and hold element 16, the comparator 17 matches and outputs a signal pulse. That signal pulse will now be written on a video tape. The time delay between the horizontal sync pulse and the moment at which the signal pulse occurs on the video line corresponds with the time delay on which the measured and integrated signal has reached a value corresponding to the average value as illustrated in figure 4.

Instead of displaying only one wave signal on the display screen of the oscilloscope 5, it is also possible to display several wave signals on the display, at least when the oscilloscope is provided with an intensity modulation input (z-input). In order to display successive received waves at successive heights on the display screen of the oscilloscope, a vertical offset is supplied at an y-input of the oscilloscope, for example realized by applying a saw tooth voltage on that y-input. Each received wave, or each series of received waves, is then displayed at a different vertical position on the display screen of the oscilloscope. The received wave or series of received waves are then represented by straight lines of varying amplitude. An increase of amplitude indicating the presence of a reflected wave pulse and thus of an object in the scanned soil. By displaying several wave forms on the display screen of the oscilloscope, there is obtained that averaging, after recording by means of a camera as set out herebefore, is now realized over several wave signals originating from a plurality of reflected waves, thus providing a more accurate result.

Figure 6 shows an example of a picture such as recorded by the video camera of the device, and representing a rotated view of the displayed wave signals on the oscilloscope obtained by generating the wave signals as set out hereabove. By displaying each received wave or series of received waves at different vertical positions, use is made of all the received signals on the one hand and, on the other hand, by displaying and recording the wave signal use is also made of all the information present in each reflected wave, thus obtaining a more efficient use of the available signal. By integration of the recorded signal such as shown in figure 6, a more accurate result is now obtained. The wave form illustrated on the right hand screen of the display picture in figure 6 illustrates the signal obtained after averaging of the received data.

Averaging over a plurality of displayed signals such as represented for example in figure 6, is realized by for example making use of a filter unit as illustrated in figure 5. The illustrated filter unit comprises a first integration element formed by a resistance 10, a condenser 11 and a differential amplifier 12. The integrated video signal of one video line is fed into a sample and hold element 16 which has a control input 23 for receiving a horizontal television sync pulse. An output of the sample and hold element 16 is connected to an input of an inverting element 18. An output of the inverting element is connected to an input of a second integration element which comprises a resistor 19, a condensor 20 and a differential amplifier 21. The condensor 20 is mounted in the feedback loop of the differential amplifier. An output of the second integration element is connected to a first input of a comparator 22 of which a second input is connected to a reference voltage such as for example earth.

By each horizontal sync pulse, the sample and hold element 16 outputs, the integrated intensity of a video line preceeding the generated horizontal sync pulse. That intensity value is inverted by the inverting element 18 and that inverted intensity value is then integrated by the second integrator. The integration of an inverted intensity value will provide a value going to zero. The moment at which the value zero is obtained is function of the value of the inputted inverted signal. The higher the absolute value of the inverted signal is, the later the value zero is outputted from the second integrator, the comparator 12 matches and supplies a signal pulse to the video recorder. The delay between the horizontal sync pulse at the moment at which the pulse occurs on the video line is thus an indication of the intensity value of the wave form. The latter is illustrated in figure 7.

## Claims

1. A device for processing a first electromagnetic wave obtained upon reflection of a second electromagnetic wave transmitted into a soil, said device comprises a display unit having a cathode ray tube display and provided for displaying said first wave in synchronism with the transmission of said second wave, characterized in that said device further comprises a video-camera (7) for recording a wave displayed on said display, and means for rotating said displayed wave about substantially 90°.

2. A device as claimed in claim 1, characterized in that said device also comprises filter unit for filtering said rotated displayed wave.

3. A device as claimed in claim 2, characterized in that said filter unit comprises an integration element (10, 11, 12) having an input for receiving the intensity value of a video line and being provided for integrating said intensity value, an output of said integration element being connected to an input of an averaging element provided for determining an average value of the integrated intensity value.

4. A device as claimed in claim 3, characterized in that said averaging element comprises a delay line (13) having an input connected to an output of said integration element and being provided for delaying an inputted signal over the period of one video line, an output of said delay line being connected to a first input of a comparator (17) of which a second input is connected to an output of a sample and hold element (16) having an input connected to a voltage divider (14, 15) which has an input connected to said output of said integration element.

5. A device as claimed in claim 2, characterized in that said filter unit comprises a first integration element (10, 11, 12) having an input for receiving the intensity value of a video line and being provided for integrating said intensity value, an output of said integration element being connected to a sample and hold element (16), having a control input for receiving a horizontal sync pulse, an output of said sample and hold element (16) being connected to an input of an inverting element (18) of which an output is connected to an input of a second integration element (19, 20, 21), an output of said second integration element being connected to a first input of a comparator (22), a second input of said comparator being provided for receiving a reference voltage.

6. A device as claimed in one of claims 1 to 5, characterized in that said rotating means are formed by a positioning of the camera rotated over substantially 90° with respect to a normal usual position of the camera.

7. A filter unit to be used in a device as claimed in one of the claims 2 to 6.

Fig.1.

Fig.2.

Fig.3.

Fig.4.

10  11  23  19  20

12  16  18  21  22

Fig.5.

Fig.6.

Fig.7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 753 134 (UNTERBERGER) | 1,6 | G 01 V 3/12 |
| Y | US-A-4 132 943 (GOURNAY et al.)<br>* Column 4, lines 57-62; figure 2 * | 1,6 | |
| A | US-A-4 586 043 (WOLF)<br>* Figure 1 * | 3 | |
| A | IEE PROCEEDINGS-F, vol. 135, no. 6, 6th December 1988, pages 563-575, Stevenage, Herts, GB; H. GOLDMAN et al.: "Analysis and application of the excision CFAR detector"<br>* Figure 1 * | 3 | |
| A,D | EP-A-0 288 578 (NIPPON TELEGRAPH AND TELEPHONE CORP.) | | |

TECHNICAL FIELDS
SEARCHED (Int. Cl.5)

G 01 V
G 01 S

The present search report has been drawn up for all claims

| Place of search | Date of completion of the search | Examiner |
|---|---|---|
| THE HAGUE | 18-12-1989 | ANDERSON A.TH. |

EPO FORM 1503 03.82 (P0401)